# EUROPEAN PATENT SPECIFICATION

(11) **EP 0 662 573 B1**
(45) Date of publication and mention of the grant of the patent: **29.04.1998**
(21) Application number: 95610001.0
(22) Date of filing: 10.01.1995
(51) Int. Cl.: F16H 25/20

(54) **Linear actuator**
Linearer Antrieb
Actuateur linéaire

(30) Priority: 10.01.1994 DK 4094
(43) Date of publication of application: 12.07.1995
(73) Proprietor: LINAK A/S, DK-6430 Nordborg (DK)
(72) Inventor: Jensen, Bent, DK-6430 Nordborg (DK)
(74) Representative: Pedersen, Soeren Skovgaard

(56) References cited:
- EP-A- 0 226 065
- EP-A- 0 258 571
- EP-A- 0 259 641
- EP-A- 0 577 541
- FR-A- 2 088 239
- US-A- 4 246 991

## Description

The present invention relates to a linear actuator comprising an actuator housing and a screw spindle rotatable in either direction, a drive nut axially displaceable on the screw spindle and connected to a driving rod, and a reversible electric motor driving the screw spindle via a gear and project the driving rod or retracting it respectively depending on the direction of the direction of rotation of the spindle.

A linear actuator of this kind is known from EP-A-0 577 541. For certain purposes and constructions it is necessary to furnish actuators with a self-locking spindle, which requires a considerably higher effect, up to 50%. Furthermore, self-locking spindles have a very fine innate pitch. However, by the invention it is reckoned that also in said situations spindles of the non-self-locking type can be used by using a braking spring in the shape of a flat coil spring with one end fixed in the actuator housing and which with a number of winding is laid around one end of the spindle or power transmission coupling for this. The braking spring is arranged such that it allows the spindle to rotate freely when it is loaded which normally is the projecting movement. In the reversing movement a braking force is applied to the spindle, this braking force being a compromise such that the spindle is locked against rotation when the motor is inoperable, but being sufficiently small such that it can be overcome by the motor. In other words the spring is arranged with its winding direction such that it is loosened i.e. unwound in the projecting movement while the windings are tightened around the spindle or power transmission coupling wherever the spring may be placed and thereby exerts a braking effect. The necessary braking force is in fact very modest as it shall only support the inertia in the construction and can be determined exactly by the number of windings.

The invention will be described further in the following with reference to the accompanying drawing in which,
Fig. 1 shows a longitudinal section through a linear actuator according to the invention,
Fig. 2 shows an enlarged view seen from above of the driven end of the actuator spindle, and
Fig. 3 shows a longitudinal section through another embodiment of a linear actuator according to the invention.

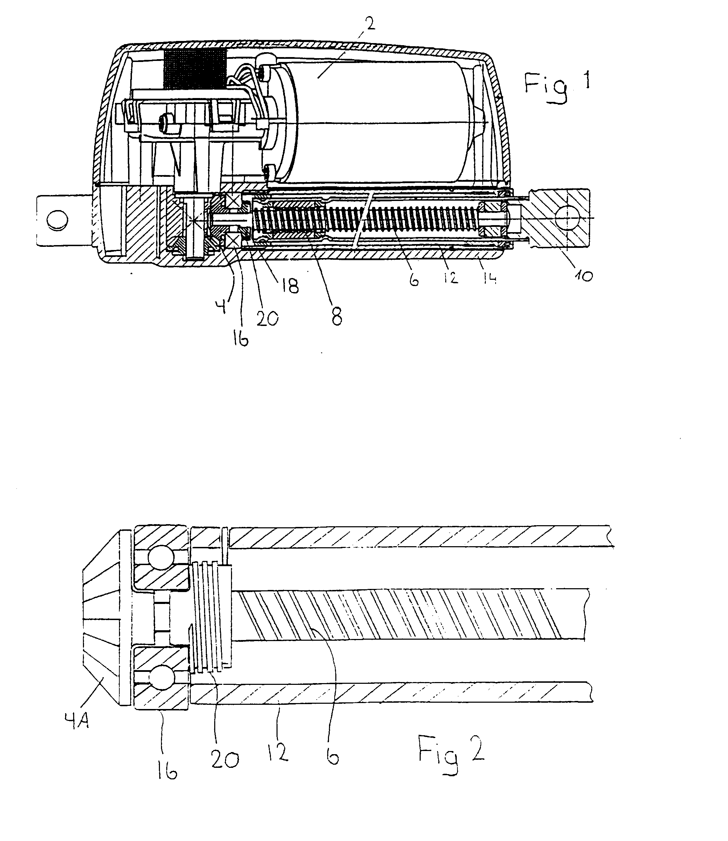

In fig. 1 is shown a longitudinal section through a linear actuator comprising a reversible electric motor 2 which by a set of bevelled gears 4 is driving a spindle 6. On the spindle is arranged a longitudinal displaceable ball drive nut 8 to which is attached a drive rod 10 in the nature of a tube telescopically arranged in a protective tube embedded in the actuator housing 14. The driven end of the spindle is resting in a ball bearing 16 arranged between one of the two bevelled gears 4A and a cylindrical element 18. Around the cylindrical element is laid a braking spring in the nature of a flat helical spring 20 with one end fixed in the actuator housing. The spring has its windings arranged around the cylindrical element in such a manner that it does not oppose the spindle in the rotating direction for projecting the drive rod 10, but when reversing the rotating direction for reversing the drive rod then the spring applies a braking force on the cylindrical element the size of which is tuned such that the spindle appears self-locking when the motor is cut off. At projecting the drive rod the direction of rotation of the spindle causes the spring which lies tightly against the cylindrical element metaphoriclaly speaking to open as the friction from the cylindrical element acts against the winding direction of the spring and thereby does not or only to a negligible extent influences on the spindle rotation. During reversing the spring on the contrary is tightened around the cylindrical element and causes the self-locking braking effect on the spindle. An enlarged view of the end of the spindle is shown in fig. 2 of the drawing.

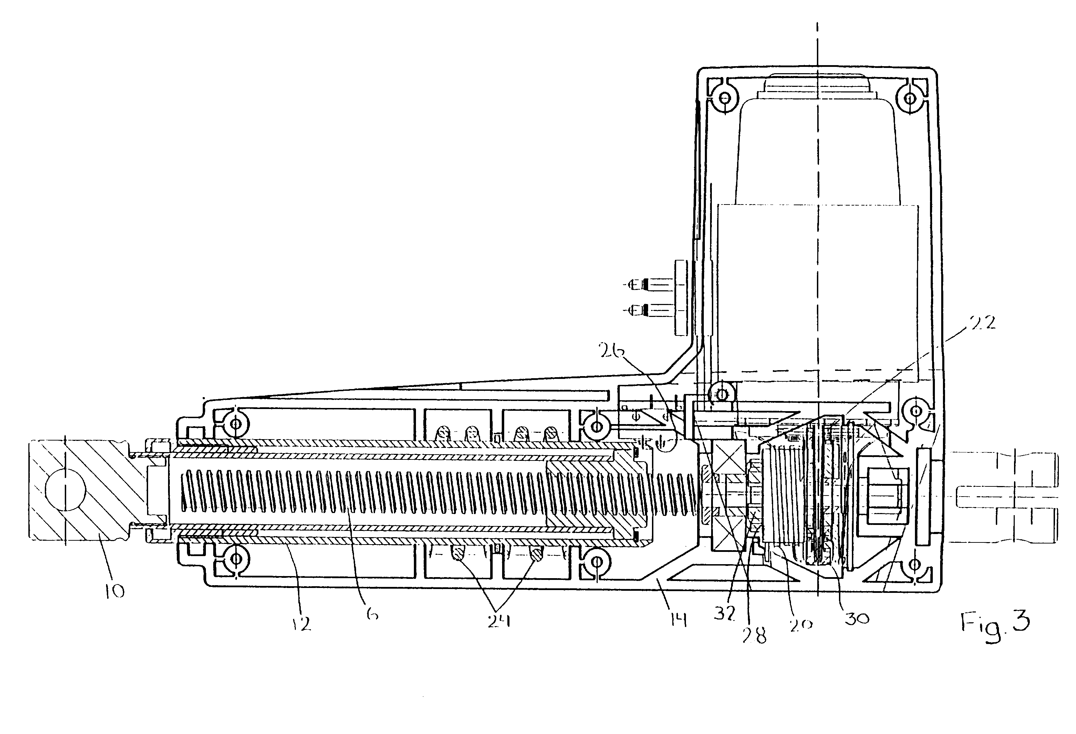

In fig. 3 of the drawing is shown a linear actuator which differs from the previous one especially in that the spindle is driven by a worm gear 22, and in that the outer tube 12 is arranged axially displaceable between two springs 24 for operating an end stop switch 26 for cutting off the motor when the drive 26 reaches the end positions. Further the braking spring 20 is here laid around a cylindrical element 28 in the worm gear. This is an cylindrical element 28 in a multi-spline transmission between the worm wheel and the spindle. The cylindrical element is integrated with the worm wheel 30 and contains a cylindrical piece 32 on the end of the spindle as the spring rests in grooves internally in the cylindrical piece. The braking spring is fixed with one end in the part of the actuator housing which houses the transmission. The braking spring acts as before namely such that it does not counteract the rotation of the spindle during projection of the drive rod but loads the transmission during reversing of the drive rod with a force sufficient to the spindle appears self-locking when the motor is cut off.

Where one previously was forced to use spindles of the selflocking type, the invention allows the possibility also in said cases of using spindles of the non-selflocking type and achieving the associated advantages such as less friction and thereby a reduced power consumption.

## Claims

1. A linear actuator comprising an actuator housing and a non-self-locking screw spindle (6) rotatable in either direction, a driving nut (8) axially displaceable on the screw spindle and connected to a drive rod (10), and a reversible electric motor (2) driving the screw spindle via a gear and respectively projecting or retracting the drive rod depending on the direction of rotation of the spindle, characterised in that the actuator further comprises a coil spring (20) with one end fixed in the actuator housing and with a number of windings arranged around one end of the spindle or a cylindrical element of a power transmission coupling associated therewith, and arranged such that it allows free rotation of the spindle during the projection movement but applies a braking force on the spindle in the retracting movement, balanced such that the spindle appears self-locking.

## Patentansprüche

1. Ein Linearantrieb, umfassend ein Antriebsgehäuse und eine nicht selbstgehemmente Schraubenspindel (6), die nach beiden Richtungen drehbar ist, eine Antriebsmutter (8), die auf einer Schraubenspindel axial verlagerbar ist und mit einer Antriebswelle (10) verbunden ist, und einen reversierbaren Elektromotor (2), der die Schraubenspindel über ein Getriebe antreibt und die Antriebswelle, abhängig von der Drehrichtung der Spindel nach vorn schiebt bzw. zurückbewegt, **dadurch gekennzeichnet,** daß der Antrieb weiterhin eine Schraubenfeder (20) umfaßt, die mit einem Ende in dem Antriebsgehäuse befestigt ist und bei der eine Anzahl Wandungen um ein Ende der Spindel oder ein zylindrisches Element einer diesem zugeordneten Kraftübertragungskupplung angeordnet sind, und die so angeordnet ist, daß sie während der Vorwärts-/Ausfahrbewegung freie Drehung der Spindel zuläßt, aber bei der Rückwärts-/Rückzugsbewegung eine Bremskraft auf die Spindel ausübt, die so ausgewogen ist, daß die Spindel selbstgehemment zu sein scheint.

## Revendications

1. Actionneur linéaire comprenant un boîtier d'actionneur et une broche filetée (6) dépourvue d'auto-verrouillage, pouvant tourner dans chaque sens, un écrou d'entraînement (8) axialement déplaçable sur la broche filetée et relié à une tige d'entraînement (10), et un moteur électrique réversible (2) entraînant la broche filetée via un pignon et sortant ou rétractant respectivement la tige d'entraînement selon le sens de rotation de la broche filetée,
caractérisé en ce que l'actionneur comprend, de plus, un ressort hélicoïdal (20) ayant une extrémité fixée dans le boîtier d'actionneur et ayant un nombre d'enroulements agencés autour d'une extrémité de la broche filetée ou d'un élément cylindrique d'un accouplement de transmission de puissance associé à celle-ci, et agencé de telle sorte qu'il permet une libre rotation de la broche filetée pendant le mouvement de sortie mais applique une force de freinage sur la broche filetée dans le mouvement de rétraction, équilibrée, de sorte que la broche acquiert un auto-verrouillage.
